# EUROPEAN PATENT SPECIFICATION

(11) **EP 2 150 847 B1**
(45) Date of publication and mention of the grant of the patent: **05.03.2014**
(21) Application number: 08767933.8
(22) Date of filing: 29.05.2008
(51) Int. Cl.: G02B 6/38

(54) **MICROSPLITTER MODULE FOR OPTICAL CONNECTIVITY**
MIKROSPLITTER-MODUL FÜR OPTISCHE KONNEKTIVITÄT
MODULE DE MICRODIVISEUR POUR UNE CONNECTIVITÉ OPTIQUE

(30) Priority: 31.05.2007 US 809390
(43) Date of publication of application: 10.02.2010
(73) Proprietor: Corning Cable Systems LLC, Hickory NC 28602 (US)
(72) Inventor: SARAVANOS, Konstantinos, Village, Texas 75077 (US); SCHWEIKER, Wolfgang, 83629 Weyarn (DE); THOMPSON, David, A., Newton, North Carolina 28658 (US)
(74) Representative: Sturm, Christoph
(86) International application number: PCT/US2008/006798
(87) International publication number: WO 2008/150423

(56) References cited:
- EP-A- 0 541 820
- EP-A- 0 840 153
- JP-A- 11 231 163
- US-A1- 2004 042 710

## Description

### BACKGROUND OF THE INVENTION

### Field of the Invention

The present invention relates generally to passive optical devices used in optical telecommunication systems, and particularly to optical splitters modules.

### Technical Background

One of the current trends in telecommunications is the use of optical fibers in place of the more conventional transmission media. One advantage of optical fibers is their larger available bandwidth handling ability that provides the capability to convey larger quantities of information for a substantial number of subscribers via a media of considerably smaller size. Further, because lightwaves are shorter than microwaves, for example, a considerable reduction in component size is possible. As a result, a reduction in material, manufacturing, and packaging costs is achieved. Moreover, optical fibers do not emit electromagnetic or radio frequency radiation of any consequence and, hence, have negligible impact on the surrounding environment. As an additional advantage, optical fibers are much less sensitive to extraneous radio frequency emissions from surrounding devices and systems.

With the advent of optical fiber networks, flexible switching devices are needed to direct light signals between fibers in an all-optical domain fiber network. An optical splitter is a type of optical switching device that takes an incoming optical signal and splits it between two or more outputs. The number of splits depends on the particular application. Because the signal is split into two or more signals, the splitter is also an attenuator whose attenuation is proportional to the number of splits. Optical splitters, also referred to as "splitter modules" because of their modular construction, have a number of shortcomings that, if improved upon, would result in a more robust splitter module for certain applications.

One splitter module shortcoming involves the need to use external attenuators for certain applications. For FTTx systems with link budgets designed for a particular number of splits, a reduced number of splits may be required, but with the same attenuation. For example, for a splitter module having a splitter chip designed for 1x32 splits (15-17dB IL), a 1x4 splitter chip may be needed, where each of the 4 splitter output ports serves electronics that connect eight customers in a multi-dwelling unit (MDU) (the 1x4 optical split still serves thirty-two customers). The optical power required by the receiving electronics, however, may still be in the 15-17 dB range, while the 1 x4 splitter module delivers 6-8 dB. of optical power. This necessitates attenuation of the splitter output from 6-8 dB to 15-17dB. This is typically accomplished using an attenuator external to the splitter. However, this adds complexity and expense to the splitter system and also makes it less compact.

Another shortcoming is that present-day splitter modules consist of separate parts: a standard splitter unit (that includes a fiber array, a splitter chip, and a ferrule) and external connectors that attach thereto. External connectors are connected to the module to establish communication through the module between remote devices. Considerable simplification and cost reduction for splitter modules could be realized if an external multi-fiber connector could be directly connected to the planar splitter chip rather than using separate connectors. Likewise, considerable simplification and cost reduction (and cost predictability) for splitter modules could be realized if a compact splitter module could be constructed that serves as both as device and module without the usual distinction between the two.

A microsplitter module according to the preamble of claim 1 is known from EP-A-0 840 153 other prior art is known from EP-A-0 541 820, JP 11231163 A and US 2004/042710 A1.

### SUMMARY OF THE INVENTION

The invention provides a microplitter module as defined in claim 1.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

### BRIEF DESCRIPTION OF THE DRAWINGS

**FIG. 1** **is** generalized schematic diagram of a splitter module system that includes the splitter module of the present invention optically coupled to an input device and at least one output device;
**FIG. 2** is a plan schematic diagram of an example embodiment of an attenuated planer splitter module according to the present invention as connected to input and output devices, wherein at least one of the waveguides in the branching waveguide array has an associated termination so that the light from the input device and carried therein is not communicated to the external device;
**FIG. 3** is a plan schematic diagram of an example of an attenuated planar splitter module similar to that of **FIG. 2****,** wherein the module is used as a 1x4 splitter module having the attenuation of a 1x32 splitter module;
**FIG. 4** is a plan schematic diagram of an embodiment of a 1x8 attenuated planer splitter module having a branching waveguide network that includes two non-branching waveguides whose energy is outputted at their respect output ports and is dissipated by the output waveguide device, thereby providing the 1x8 splitter module with the attenuation of a 1x32 splitter module;
**FIG. 5** is a plan schematic diagram of an example embodiment of the 1x8 attenuated planer splitter module similar to that of **FIG. 4****,** wherein the two branch waveguides are terminated prior to reaching the splitter chip end;
**FIG. 6** is a plan cut-away view of an example embodiment of a direct-connect splitter module according to the present invention;
**FIG. 7** is an end-on view of the multi-fiber output end of the direct-connect splitter module of **FIG. 6****;**
**FIG. 8** is a plan cut-away view of the ferrule body used in the direct-connect splitter module of **FIG. 6****;**
**FIG. 9** is an end-on view of the single-fiber input end of the direct-connect splitter module of **FIG. 6****;**
**FIG. 10** is a plan cut-away view similar to that of **FIG. 6** but showing an outer housing formed to have features associated with an MTP-type connector;
**FIG. 11** is an end-on view similar to that of **FIG. 7****,** but showing the outer housing;
**FIG. 12** is a perspective end-on view of the output end of the direct-connect splitter module having the form an MTP-type connector, shown along with a MTP-type mating connector that establishes optical communication with an external device;
**FIG. 13** is a schematic side cut-away view of an example embodiment of a microsplitter module according to the present invention;
**FIG. 14** is a perspective view of an example embodiment of a microsplitter module according to the present invention wherein the housing is formed so that the module is compatible with an MTP-type connector;
**FIG. 15** is a side cut-away view similar to **FIG. 13** that illustrates another example embodiment of microsplitter module that includes a fiber array arranged between the splitter chip and the ferrule, and also including a fiber pigtail at the input end; and
**FIG. 16** is a side cut-away view similar to **FIG. 13****,** illustrating another example embodiment of a microsplitter module wherein the fiber array is replaced by a direct fiber bonding unit.

### DETAILED DESCRIPTION OF THE INVENTION

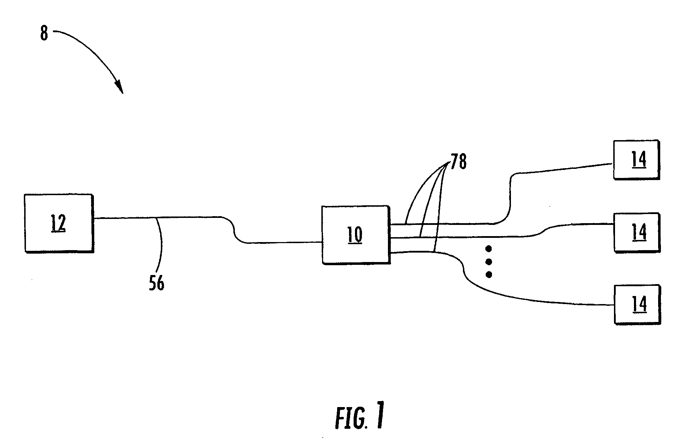

**FIG. 1** illustrates a generalized example embodiment of a splitter module system **8** that includes a splitter module **10** according to the present invention. Splitter module **10** is connected to an external input device **12** via an input optical fiber **56** and to one or more external output devices **14** via corresponding output optical fibers **78.** Both external input device **12** and external output device **14** can be capable of transmitting and receiving signals and communicating with each other via module **10** in both directions, but are referred to as input and output devices for the sake of simplicity and establishing an orientation in the Figures.

The present invention is directed to various types of splitter modules **10** that provide enhanced performance as well as other advantages. Example embodiments of the various types of optical splitter modules are described in detail below.

### Attenuated planar splitter module

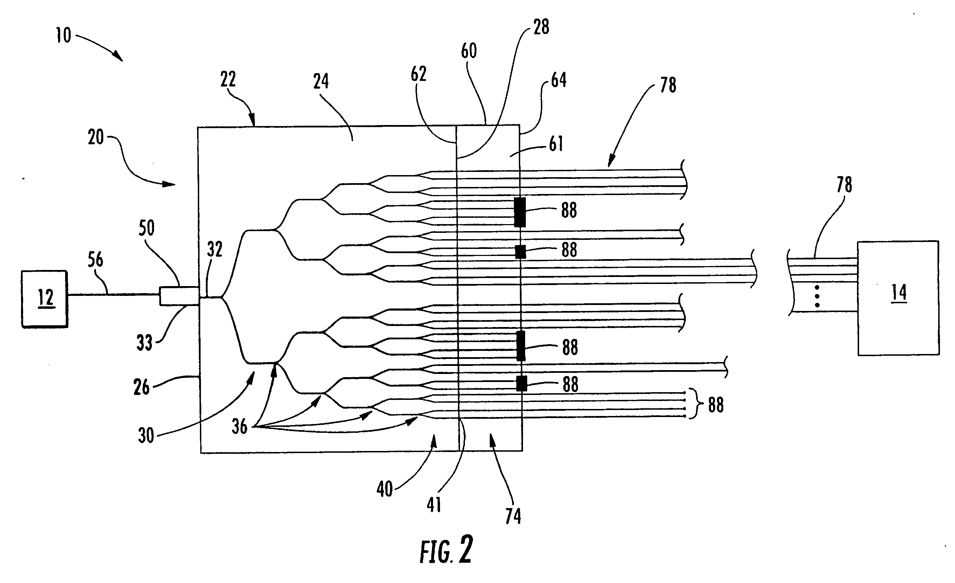

**FIG. 2** is a schematic plan view of an attenuated planar splitter module **10** according to the present invention shown connected to external input device **12** and one external output devices **14** (one such external output device is shown by way of illustration), such as shown in **FIG. 1****.**

Module **10** includes a splitter chip **20** having a body **22,** an upper surface **24,** an input end **26** and an output end **28.** Formed in or on body **22** (i.e., on or below surface **24**) is a branching waveguide network **30.** Branching waveguide network **30** starts out as a single input waveguide **32** with an input end (port) **33** at input end **26** and splits j times at various 50:50 splitters **36** to ultimately form n = 2^{j} output waveguides **40** each having an output end (port) **41** at output end **28.** Note that branching waveguide network **30** can have one or more input waveguides **32;** one such waveguide is shown for ease of illustration.

For the example splitter chip **20** of **FIG. 2****,** j = 5, so that the number n of output waveguides **40** is 2⁵ = 32. The output power associated with each output port **41** is 1/n as compared to the power inputted at input port **33,** so that for n = 32, the output power at each port is 1/32. In the convention of optical fiber telecommunications, the attenuation is expressed in decibels (dB). Thus, the attenuation A_{O} associated with each of the n output ports **41** (for the case where n = 2^{j}) is given by A_{O} = -10 log(P_{IN}/P_{OUT}), which for P_{IN} normalized to 1 and n = 2 is given by A_{O}(n) = -10 log(1/n) = 10 log(n). Thus, for n = 2, A_{O}(2) = 3dB; for n = 4, A_{O}(4) = 6 db; for n = 8, A_{O}(8) = is 9dB; for n = 16, A_{O}(16) = 12 dB, etc.

Module **10** includes an input ferrule **50** operably connected to input port **33** of input waveguide **32.** Input ferrule **50** allows an input optical fiber **56** to be optically coupled to input waveguide **32.** Connecting input optical fiber **56** to external input device **12** allows the input device to be in optical communication with one or more external output device **14** via module **10.**

Module **10** also includes a fiber array **60** having a body **61,** and input end **62** and an output end **64.** Fiber array **60** includes a plurality of optical fiber sections **74,** supported by substrate body **61** (e.g., via v-grooves formed therein). Fiber array **60** is arranged with its input end **62** fixed to splitter chip output end **28** so that optical fiber sections **74** align with output ports **41.** This provides optical coupling between optical fiber sections **74** and output waveguides **40** of splitter chip **20.** Fiber array **60** thus allows corresponding one or more output optical fibers **78** to be placed in optical communication with their respective output waveguides **40** of splitter chip 20, thereby providing optical communication between external input device **12** and one or more external output devices **14.**

It often happens that a 1 xn splitter chip **20** has one or more output ports **41** that do not meet specification and are therefore unsuitable for use. This can occur due to, for example manufacturing errors in branching waveguide network **30** or because of problems in the output ports themselves. Such errors lead to, for example, broken or otherwise defective waveguides that do not meet the required transmission-related specifications. Splitter chips that do not meet specification for all n output ports are considered to have little if any value and are typically scrapped. Given that the typical yield in splitter chip production is about 60%, this leaves 40% of product being scrapped.

However, where there are at least "m" good (i.e., suitable) ports **41** remaining on the 1xn splitter chip **20** that can be used for communicating with external device **14,** the present invention exploits these m remaining suitable ports and utilizes the otherwise "damaged" splitter chip as a 1xm splitter, with each output port having the attenuation of a 1xn splitter. If necessary, the unsuitable and therefore unused (n-m) output ports **41** are terminated (e.g., using terminations **88,** discussed below) in a manner that prevents any light that could be emitted by these ports from being transmitted to an external device. For example, the corresponding optical fiber section **74** in fiber array **60** is terminated, e.g., by allowing the light associated therewith to dissipate either in substrate body **12** or the material making up fiber array body **61** (e.g., potting compound or glass). In an example embodiment, light associated with an unsuitable output port **41** can be dissipated by allowing it to exit the output port and be transmitted into free space. In another example embodiment, such light is dissipated by a termination **88** in the form of a short section of optical fiber connected to a corresponding optical fiber section in fiber array **60,** wherein the termination has an absorbing material at its output end. This is illustrated in **FIG. 2****,** wherein module **10** is shown with a number of output fibers **78** optically coupled to select operable output ports **41** via output waveguide device **66.** Those output ports **41** where other output fibers **78** would connect to output waveguide device **66** are shown as having corresponding terminations **88** at the corresponding optical fiber sections **74** Terminations **88** include, for example, short optical fiber sections as mentioned above, a light-absorbing material, or a light-dissipating material (e.g., potting compound).

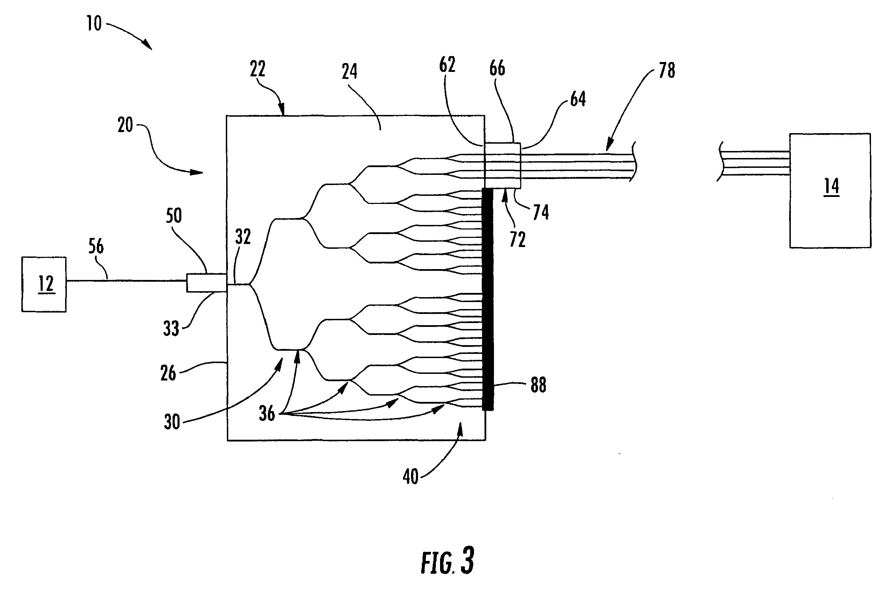

**FIG. 3** is a plan schematic diagram of an example embodiment of a planar attenuated splitter module **10** similar to that of **FIG. 2****,** wherein the 1 x32 splitter chip **20** meets specification on only m = 4 adjacent channels (output ports) **41,** thereby forming a 1x4 splitter module having the same attenuation as the 1x32 module. Four optical fibers **78** are coupled to the four operable channels via an output waveguide device **66** having a waveguide array **72** with four waveguides. Terminations **88** are provide at the remaining unsuitable output ports **41.**

In an example embodiment of the invention, rather than using a splitter chip that includes one or more unsuitable output ports due to manufacturing errors, a 1xm splitter chip **20** is fabricated to have the attenuation of a 1xn splitter but with only m < n output ports. This is accomplished, for example, by incorporating one or more additional splitters **36** into splitter chip **20,** with corresponding one or more waveguides associated therewith that carry light that is not meant to be provided to external device **14.** In this case, the one or more extra splitters **36** act as attenuators, thereby obviating the need for external attenuators. Such a 1xm splitter chip **20** is less expensive than a 1xn splitter chip because it can be made smaller and does not require external attenuators. In this example embodiment wherein each split does not lead to an operable output port **41,** the number of output ports **41** is less than 2^{j}. The overall attenuation of such a splitter is given by the more general expression A_{O}(j) = -10 log(1/2^{j}) = 10log(2^{j}), where j is the number of splitters **36.**

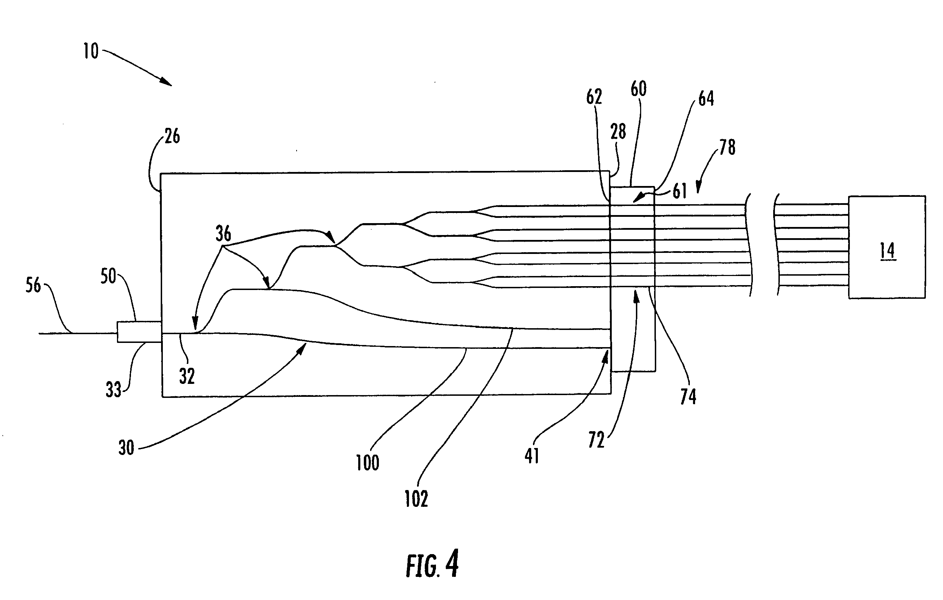

**FIG. 4** is a plan schematic diagram of an example embodiment of an attenuated splitter module **10** according to the present invention that includes a 1x10 splitter chip **20** wherein branching waveguide network includes j = 5 splitters **36.** Splitter chip **20** includes a branch waveguide **100** that branches off at the first (i.e., the most input-end-wise) splitter **36** and that proceeds directly to its corresponding output port **41.** This particular output port provides approximately 1/2 output power (i.e., has 3 dB attenuation) as compared to the power inputted into input waveguide **32** (minus insertion loss and excess loss). This amount of output power is more than what is wanted in the output signal and so the corresponding port **41** is therefore considered unsuitable for use. Splitter chip **20** also includes a second branch waveguide **102** that branches off at the second splitter **36** and that proceeds directly to its corresponding output port **41.** This particular output port provides approximately 1/4 output power (i.e., has 6 dB attenuation). This amount of output power is also more than what is wanted in the output signal and so the corresponding port **41** is also considered unsuitable for use.

The remaining portion of branching waveguide network **30** includes additional splitters 36 that form eight output waveguides **40** each having corresponding output ports **41** that provide 1/32 output power (i.e., 15 dB attenuation). These eight output ports **41** are shown as optically coupled to corresponding optical fibers **78** via fiber array **60** that has eight optical fiber sections **74.** Light carried by waveguides **100** and **102** exits their respective ports **41** and is dissipated by material (e.g., glass) of body **61** of fiber array **60.** Waveguides **100** and **102** are thus "dead-ended" by output waveguide device **60** and are only present to provide the desired 15 dB attenuation for the other eight output ports.

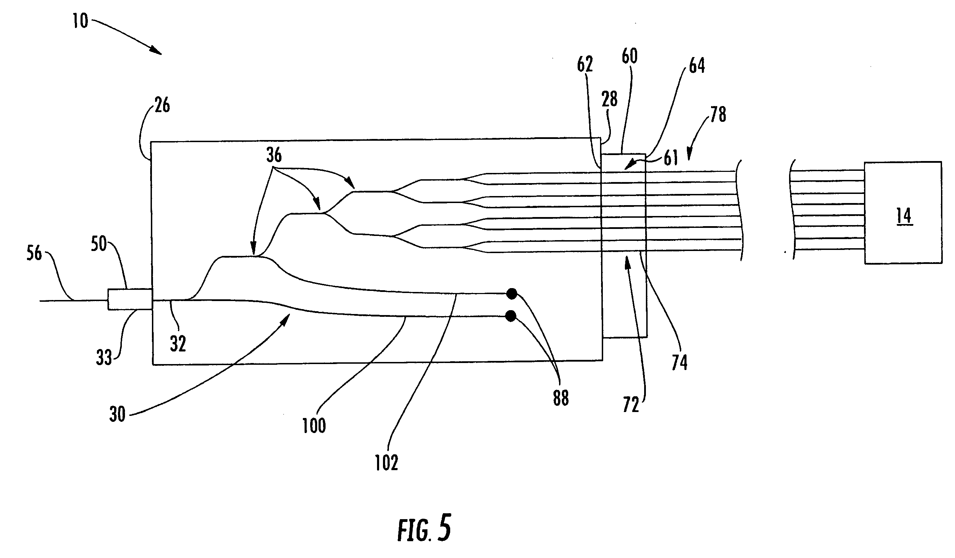

**FIG. 5** is a plan schematic diagram of an example embodiment of an attenuated planer splitter module similar to that shown in **FIG. 4****,** but wherein waveguides **100** and **102** have respective terminations **88** prior to the waveguide reaching splitter chip end **28.** Terminations **88** absorb the light energy in waveguides **100** and **102,** or cause some or all of the light to be absorbed or otherwise dissipated by splitter chip body **22.** This obviates the need to dissipate the light energy carried by these waveguides using fiber array **60.**

Using any of the above methods, various splitter modules, e.g., 1x4, 1x8 and 1x16 splitter modules, can be produced with about 15 to about 17 dB insertion loss using a branching waveguide network **30** that includes n = 32 output ports (e.g., j = 5 splitters **36**) ("1/32 splits"). Additionally, 1 x4 and 1 x8 splitters can be produced with about 12 to about 14 dB insertion loss using a branching waveguide network **30** that includes n = 16 output ports (i.e., j = 4 splitters **36**) ("1/16 splits"). Using these methods, any combination of 1xm splitter modules with 1xn splitter loss may be made, such as 1x2 splitter module with about 15 to about 17 dB insertion loss using 1/32 splits or with about 12 to about 14 dB loss using 1/16 splits; 1x32s with 1/64 splits, etc. Also as discussed above, configurations with j splitters wherein the number of suitable output ports m < 2^{j} are also possible, where these suitable output ports have an associated attenuation in dB given by A_{O} = 10log(2^{j}).

### Direct-connect splitter module

As discussed above, present-day splitter modules are made up of separate main parts: a splitter chip, an input connector (ferrule), and an output waveguide device (waveguide array), as well as the external connectors that attached thereto. External connectors are connected to the module so that communication through the module between external input and output devices can be established.

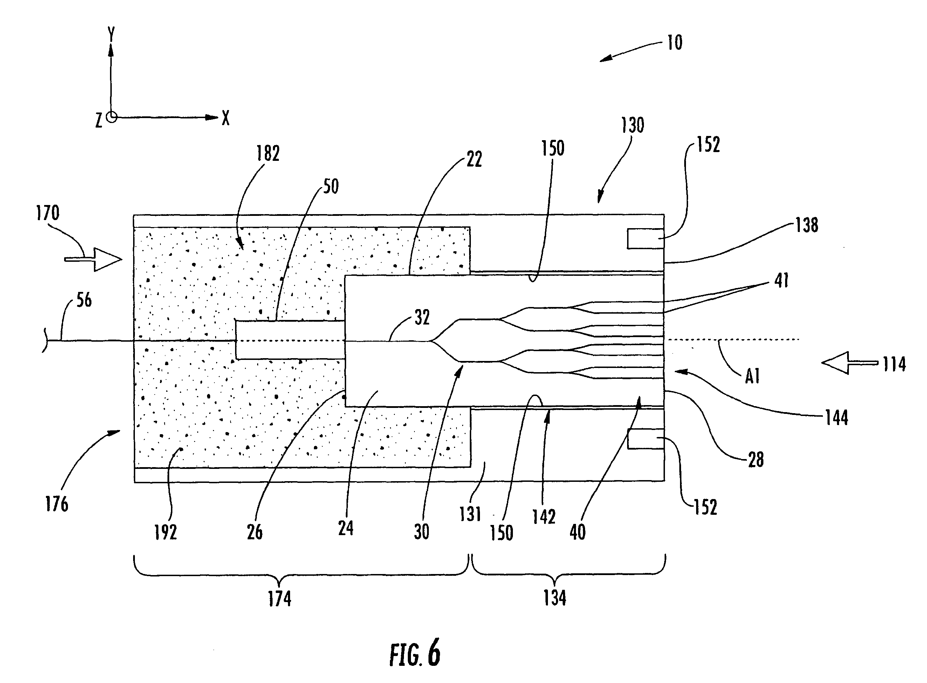

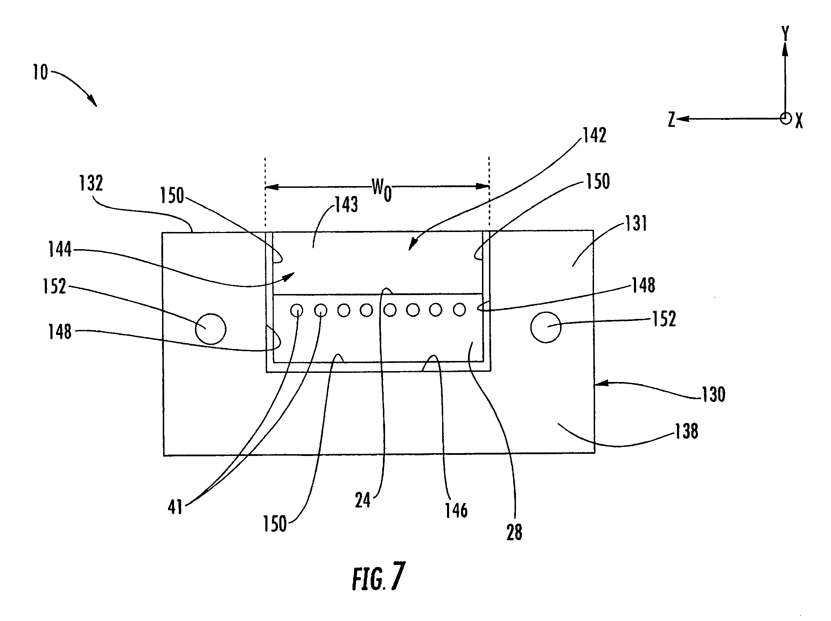

**FIG. 6** is a plan schematic diagram of an example embodiment of a direct-connect splitter module **10** according to the present invention. **X-Y-Z** Cartesian coordinates are provided for the sake of reference (**Z** is out of the page). Module **10** includes a splitter chip **20** as described above, and an input ferrule **50** attached to splitter chip input end **26.** Ferrule **50** accommodates input optical fiber **56** that is optically coupled to input waveguide **32.** Notably absent from splitter module **10** of **FIG. 6** is optical fiber array **60** normally located at output end **28** of splitter chip **20** to facilitate connecting the splitter chip to external optical fibers **78** (see **FIG. 2**). **FIG. 7** is an end-on view of direct-connect splitter module **10** as seen looking along arrow **114** (i.e., in the **-X** direction).

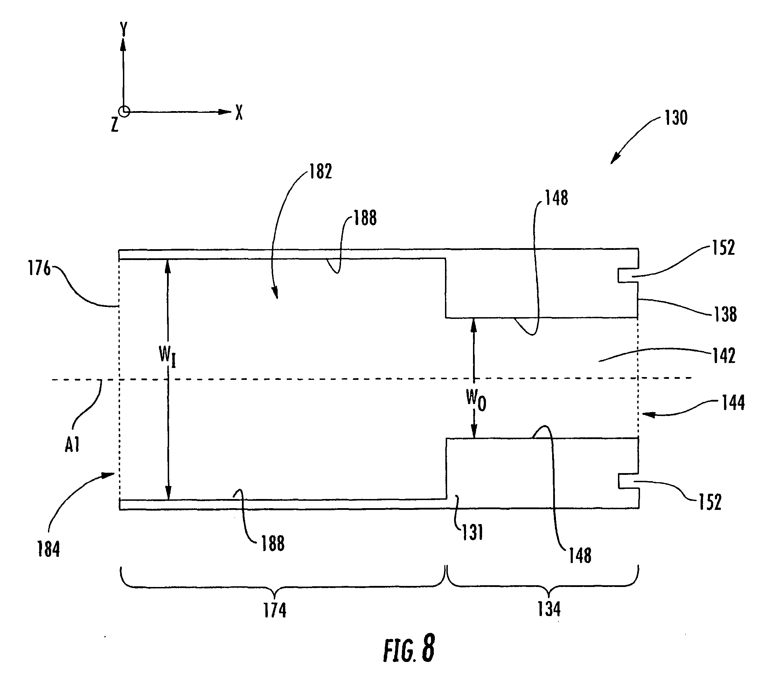

With reference to **FIG. 6** through **FIG. 8****,** splitter module **10** includes a ferrule **130** (e.g., a multi-fiber ferrule) having a central axis A₁, a body **131,** and an upper surface **132.** Splitter module **10** includes an output end portion **134** that includes an output end **138** and an input end portion **174** that includes an input end **176.** **FIG. 8** is a plan schematic diagram similar to **FIG. 6****,** but showing just ferrule **130.** Ferrule **130** includes an output-end channel **142** formed in upper surface **132** and centered along central axis **A₁** and that includes an open end **144** at output end **138.** Output-end channel **142** is defined by a lower wall **146** and two opposing sidewalls **148** that define an output-end channel width **W_{O}.** Channel width **W_{O}** is sized so that output-end channel **142** closely accommodates at least the output-end section of splitter chip **20** so that splitter chip output end **28** substantially coincides with the **Y-Z** plane defined by output end **138.**

Splitter chip **20** (or at least the output-end portion thereof) is axially aligned within output-end channel **142** and is closely held therein using, for example, an adhesive layer **150** provided on lower wall **146** and/or sidewalls **148.** An important step forming direct-connect splitter module **10** is the close control adhesive layer **150.** Adhesive layer **150** is preferably as thin as possible. Further, the shrinkage and potential rate actions of adhesive layer **150** needs to be taken into account so that proper alignment is maintained. In an example embodiment, adhesive layer **150** is formed using a two-step process. The first step involves prefixing with a very little amount of adhesive to minimize the adverse effects of adhesive shrinkage. The second step uses a larger amount of adhesive to achieve long-term fixing of splitter chip **20** to walls **146** and/or **148.**

In an example embodiment, a planar glass cover **143** is fixed atop upper surface **24** of splitter chip **20** and is sized to fill the remaining space in output-end channel **142** up to upper surface **132** of ferrule body **131.**

Output end **138** includes one or more guide members **152** on either side of output-end opening **144** that correspond to the position of output ports **41** of output waveguides **40** in planar splitter chip **20.** In an example embodiment, one or more guide members **152** are guide pins or guide holes-for example of the type used with a standard MTP connector and/or the connector of the type disclosed in US Patent Application Serial Number 11/076,684 filed March 10, 2005 and assigned to the present assignee. In general, the type and position of the guide members **152** correspond to the particular connector type being used.

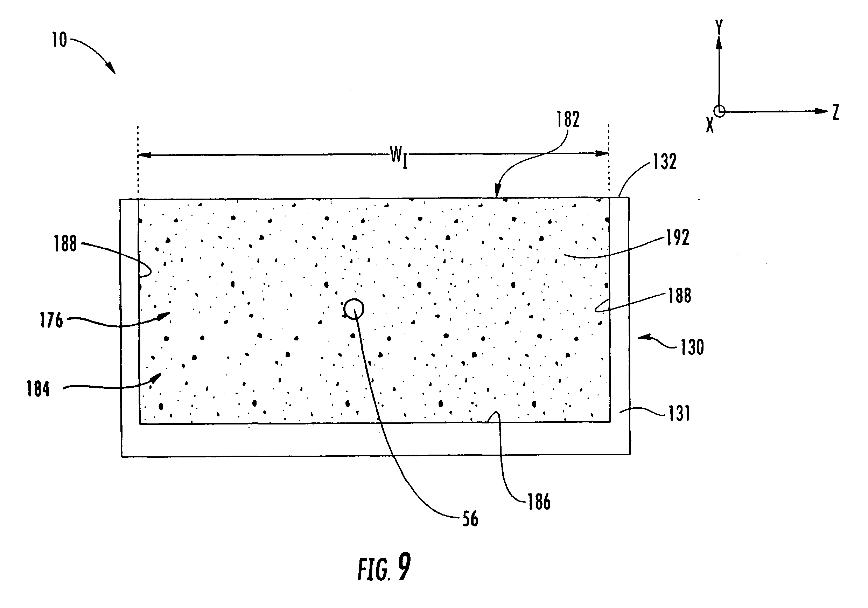

**FIG. 9** is an end-on view of input end **176** of direct-connect splitter module **10** as seen looking along arrow **170** (i.e., in the **+X** direction). Input-end section **174** of ferrule **130** includes an input-end channel **182** formed in surface **132** of body **131** and centered along central axis **A₁.** Input-end channel **182** has an open end **184** at input end **176.** Input-end channel **182** is defined by a lower wall **186** and two opposing sidewalls **188** that define an input-end channel width **W_{I}.** Channel width **W_{I}** is sized so that input-end channel **182** axially accommodates the input-end section of splitter chip **20** as well as ferrule **50.** Input-end interior width **W_{I}** is preferably greater than output-end interior width **W_{O}** so that the remainder of input-end channel **182** can be filled with a thermosetting resin **192** (e.g., potting compound) that serves to hold splitter chip **20,** ferrule **50** and input optical fiber **56** in mutual alignment within input-end section **174** of ferrule **130.**

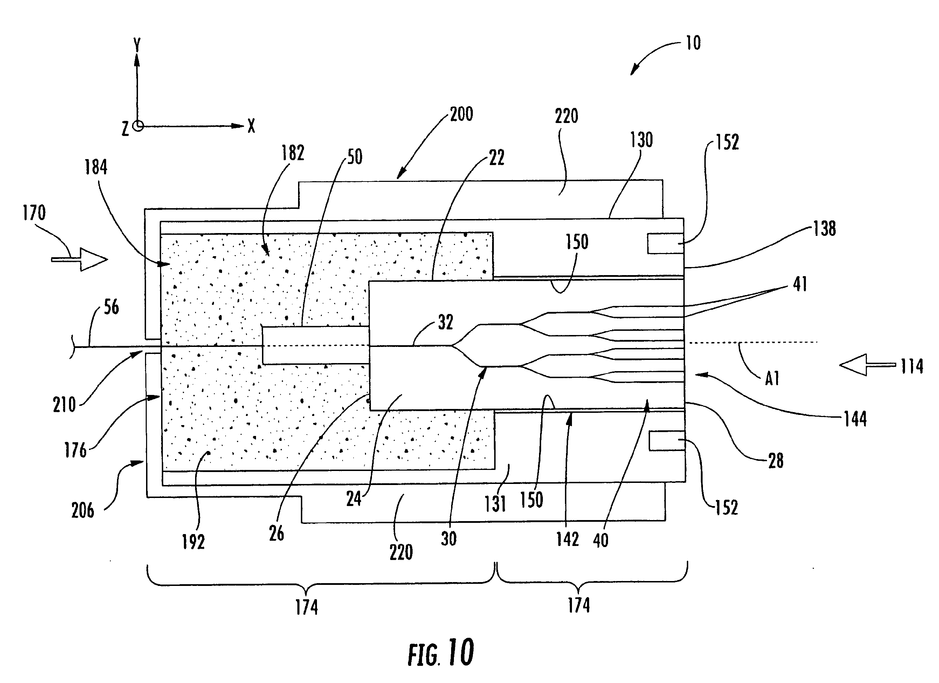

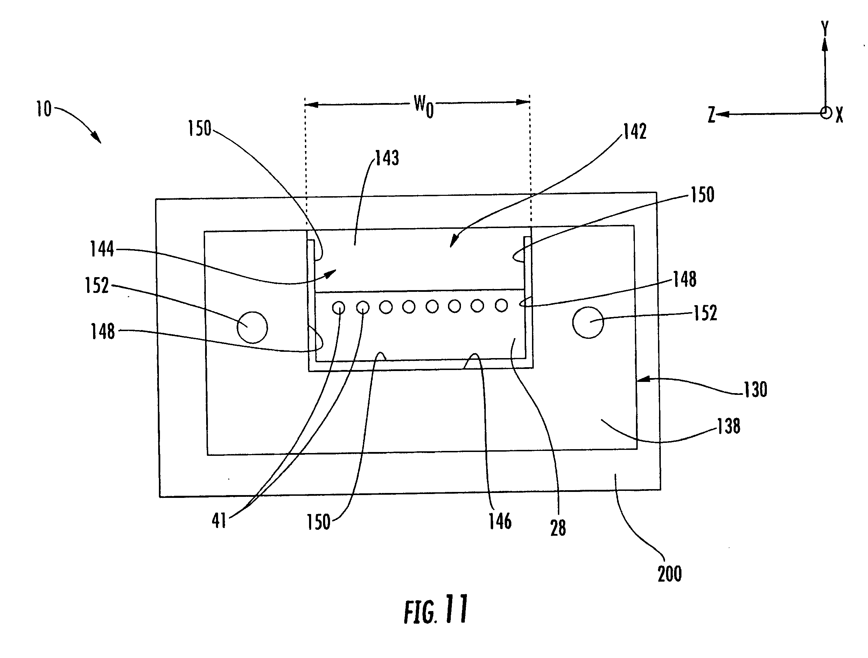

In an example embodiment illustrated in **FIG. 10** and **FIG. 11****,** direct-connect splitter module **10** includes a housing **200** that surrounds at least a portion of ferrule **130.** Housing **200** includes an input end **206** that covers input open end **184** so as to contain thermosetting resin **192,** and that includes a opening **210** sized to pass input optical fiber **56** to ferrule **50.** In an example embodiment, housing **200** also includes a section **220** that makes the module output-end section **134** conform or otherwise be compatible with a particular type of multi-fiber connector, such an MTP connector. For example, housing **200** can be formed to be compatible with spring-and-lock type guide members **152,** and can have dimensions similar to an MTP connector, which dimensions are 30 millimeters by 7 millimeters by 12 millimeters.

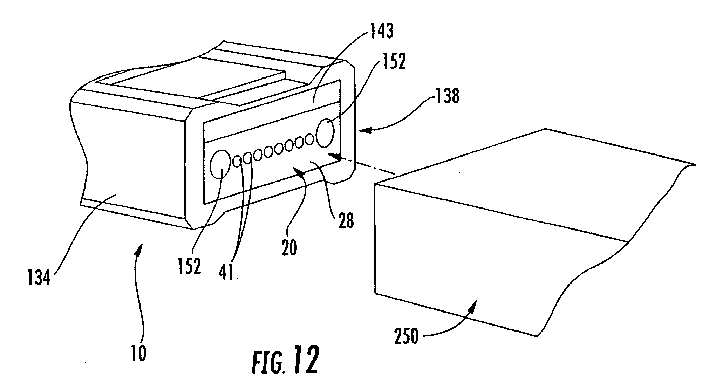

**FIG. 12** is a perspective end-on view of output end **138** of direct-connect module **10,** wherein the output end is in the form an MTP connector. Also shown in **FIG. 12** is a mating connector **250** that establishes optical communication with an external device (not shown). Direct-connect splitter module **10** allows external connector **250,** such as an MTP mating connector, to be directly connected to output ends (ports) **41** of output waveguides **40** in splitter chip **20** without the need for fiber array **60** or like waveguide array.

In an example embodiment, direct-connect splitter module **10** includes a planar splitter chip **20** with a glued single-fiber ferrule **50** in an MTP-adapted output end **138 (****FIG. 12****).** Also in an example embodiment, output waveguides **40** of planar splitter chip **20** have the same pitch as an MTP ferrule. Therefore, instead of a ferrule, the planar splitter chip can be placed inside an elongated MTP-ferrule housing **200.** Alignment and fixation with external connector **250** is achieved using guide members **152,** e.g., guide pins and/or other types of retention members, such as clips.

The direct-connect splitter module **10** of the present invention provides a number of advantages over a conventional splitter module. First, there is a significant reduction in cost, since for each direct-connect splitter module the expense and labor associated with including fiber array **60** and the associated connectors is avoided. In addition, labor costs can be reduced by using automated image recognition of splitter waveguides **40** and guide members **152,** which allow a faster alignment without any optical connections. In addition, the size of direct-connect splitter module **10** can be made significantly smaller than a conventional splitter module, so that the splitter module of the present invention can be used in smaller cabinets, closures, or other small access points, or can be directly integrated into cables or ducts. Overall, better optical and reliability performance may be achieved because the additional loss that usually occurs between the fiber array and the planar splitter chip is avoided.

In an example embodiment, housing **200** is formed from or otherwise includes the same basic material (or a material with similar thermal expansion coefficient) as an MTP ferrule, and has the same form as an MTP-connector on the connector side, such as shown in **FIG. 12****.** A standard planar splitter chip **20** already has the same output waveguide pitch as an MTP-ferrule.

In an example embodiment, the alignment of splitter output waveguides **40** relative to guide members **152** is performed by automated image recognition. In this case, no optical connections are necessary. Housing **200** has a fixed position, with splitter chip **20** mounted to an alignment station so that it can be moved in all directions inside a slot of the housing. In an example embodiment, the housing is moved while splitter chip **20** is fixed in position.

The direct-connect splitter module **10** of the present invention as described above provides for a direction connection at output end **138** of output-end section **174.** However, the direct connection can be formed on input-end section **174** at splitter chip input end **26** using the same or similar approach. Likewise, a direct-connect module **10** can be formed that has a splitting ratio besides the 1x8 ratio shown (e.g. 1x2, 1x4, 1x16, 1x32, 1x64, 2x16, 2x32, 2-1x8, 2-1x16, 4-1x8, etc) using the methods of the present invention. Any other PLC (planar lightwave circuit) chip can be assembled using the same technology. In an example embodiment, the use of materials in direct-connect module **10** that have the same or like coefficients of thermal expansion (CTE) of the particular connector used with the module is preferred. For example, it may be advantageous to use a polymer-based material for splitter chip body **22** when the intended use for the module is with a polymer-based connector **250 (****FIG. 12****).**

### Microsplitter Module

Present-day splitter devices are on the order of 50 millimeters by 10 millimeters by 4 millimeters and are integrated in a larger splitter module, typically on the order of 150 millimeters by 100 millimeters by 30 millimeters. In present-day splitter modules, one can differentiate between the splitter device and the splitter module. Such splitter modules are currently extensively used in FTTx applications. The microsplitter module according to the present invention and described immediately below seeks to provide a very small connectorized splitter that serves as device and module at the same time so that the differentiation between device and module is, for all practical purposes, eliminated.

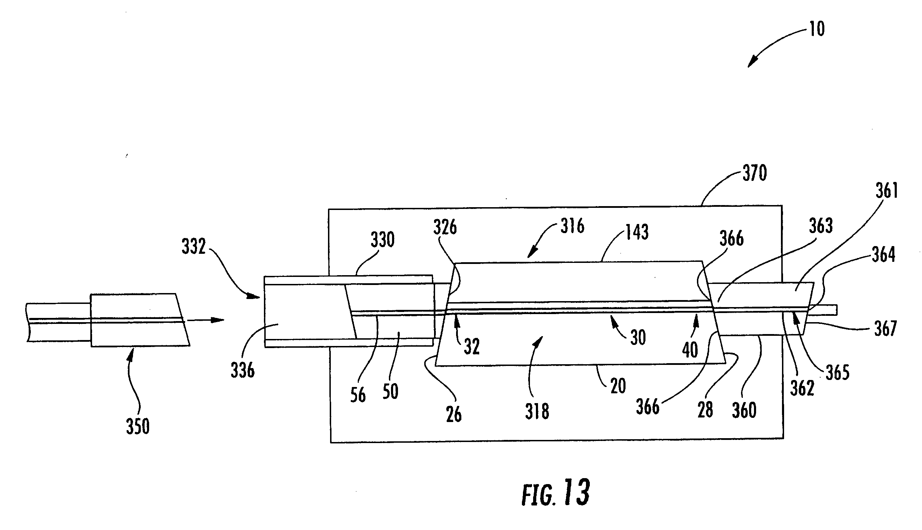

**FIG. 13** is a side cross-sectional diagram of an example embodiment of a microsplitter module **10** according to the present invention. Module **10** includes a splitter chip assembly **316** that has a body **318** made up of planar splitter chip **20** and planar glass cover **143.** In an example embodiment, splitter chip assembly **316** includes beveled input and output ends **26** and **28** and the corresponding ends of planar glass cover **143** are also beveled to match.

Module **10** also includes input ferrule **50** attached to input end **26** of splitter chip **20** and that provides optical coupling between input optical fiber **56** and input waveguide **36** of branching waveguide network **30.** In an example embodiment, input ferrule **50** is an angled polished connector (APC) having a beveled end **326** that matches input beveled end **26** of splitter chip assembly **20.** A connector sleeve **330** covers input ferrule **50** and has an open end **332** that opens to an interior **336.** Connector sleeve **330** is adapted to facilitate optically connecting input optical fiber **56** to an external optical fiber cable **350.**

Module **10** further includes a multi-fiber ferrule **360** having a body **361** that supports a plurality of output optical fibers **362** that each include an input end **363** and an output end **364.** Output optical fibers **362** are arranged in holes **365** that run through ferrule **360** from an input end **366** to an output end **367.** Holes **365** are formed to have the same pitch as output waveguides **40** of splitter chip **20** so that optical fiber output ends **364** have the same pitch as the output waveguides.

In an example embodiment, multi-fiber ferrule **360** is attached (e.g., bonded) to output end **28** of splitter chip **20** so that output waveguide ends **41** of output waveguides **40** are optically coupled (e.g., butt-coupled) to the corresponding input ends **363** of output optical fibers **362.** In an example embodiment, multi-fiber ferrule **360** includes a beveled end **368** that matches output beveled end **28** of splitter chip assembly **316.**

Microsplitter module **10** includes a housing **200** that contains most if not all of each of the input ferrule **50,** multi-fiber ferrule **360** and splitter chip assembly **316.** In an example embodiment, housing **200** is formed (e.g., molded) to conform to a particular multi-fiber connector type to be used with the module, such as an MTP-type multi-fiber connector. Housing **200** also serves to support the input ferrule **50,** multi-fiber ferrule **360** and splitter chip assembly **316** and to maintain these elements in mutual alignment, particularly during use in the field.

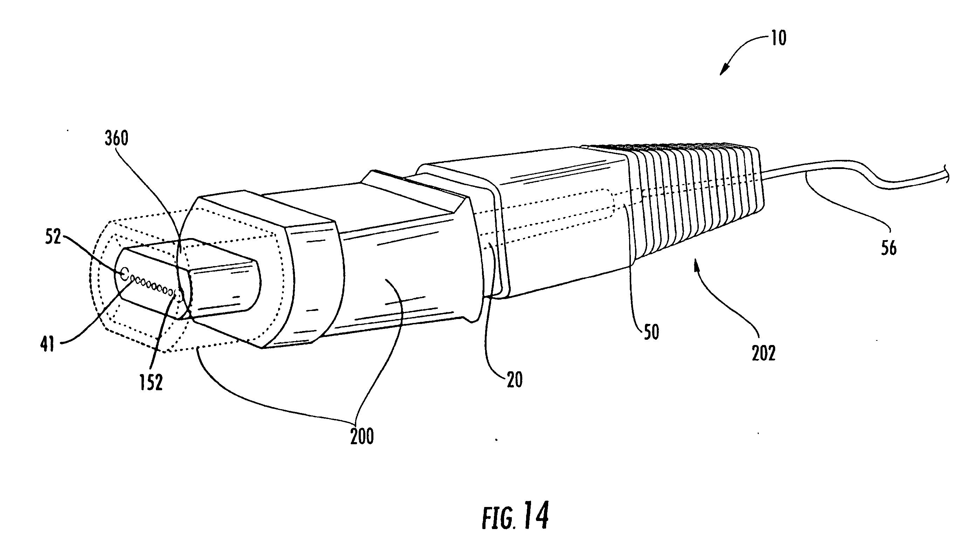

**FIG. 14** is a perspective view of an example microsplitter module **10** according to the present invention, wherein housing **200** is formed so that the module is amenable for use with MTP-type connectors. Housing **200** also includes a boot section **202** that contains input ferrule **50** and input optical fiber **56** in a pigtail configuration. The microsplitter module **10** of **FIG. 14** illustrates the utility of the present invention with respect to incorporating the module directly into a cable assembly.

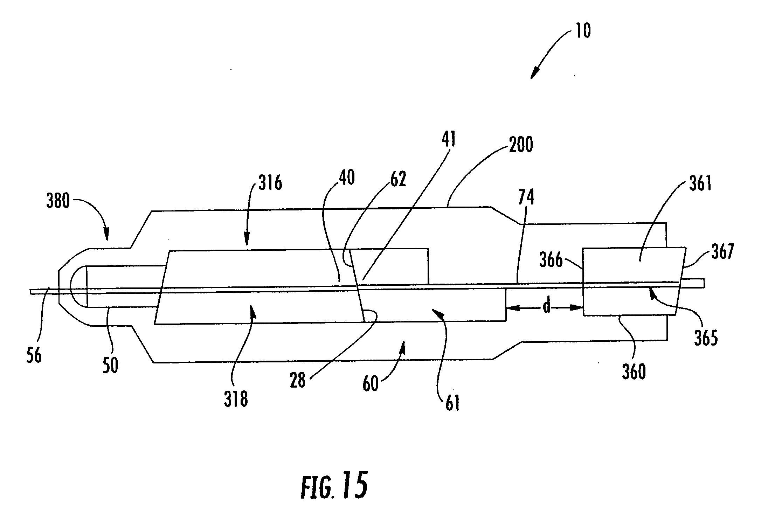

**FIG. 15** is a side cut-away view similar to **FIG. 13** that illustrates another example embodiment of microsplitter module **10** that includes fiber array 60 arranged between splitter chip output end **28** and multi-fiber ferrule **360.** Microsplitter module **10** is also shown as having pigtail input **380** formed by input ferrule **50** and input optical fiber **56.**

In microsplitter module **10** of **FIG. 15****,** input end **62** of fiber array **60** is attached (e.g., bonded) to output end **28** of splitter chip assembly **316** so that optical fiber sections **74** supported by fiber array **60** are optically coupled to output waveguides **40** of splitter chip **20** at output ports **41.** Optical fiber sections **74** then serve as the output fibers **362.** Optical fiber sections **74** run through holes **365** in multi-fiber ferrule **360.** Multi-fiber ferrule **360** is spaced apart from waveguide device **60** by a distance **d** (e.g., **d** = 1 cm). This configuration (called a "CTE-matched output configuration") is advantageous in that it avoids adverse thermal effects due to differences in the CTE between fiber array body **61,** which is typically made of glass, and multi-fiber ferrule body **361,** which is typically made of a glass-filled plastic having a substantially different CTE than glass

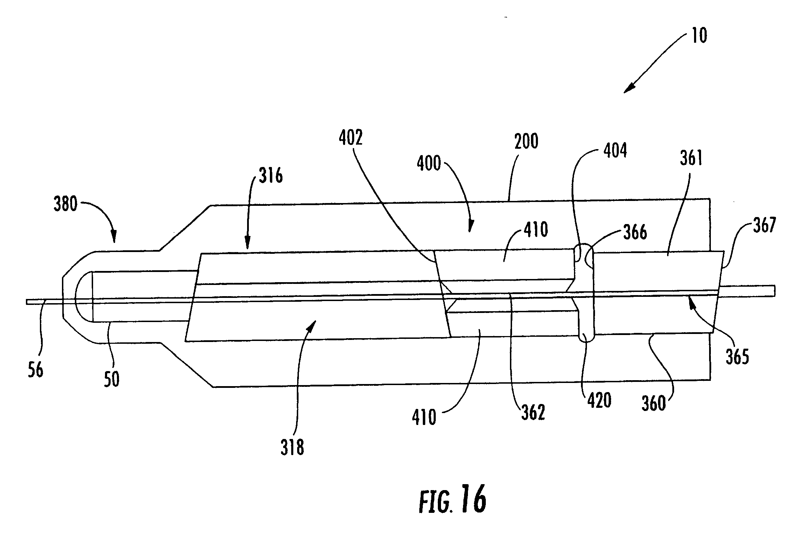

**FIG. 16** is a cut-away side view of another example embodiment of microsplitter module **10** similar to that of **FIG. 15****,** wherein fiber array **60** is replaced by a directly bonded fiber assembly **400** having an input end **402** and an output end **404.** Thermal stabilization unit **400** is mechanically decoupled from multi-fiber ferrule **360.** In an example embodiment, directly bonded fiber assembly **400** includes glass plates **410** arranged to support output optical fibers **362.**

In an example embodiment, input end **402** of thermal stabilization unit **400** is attached (e.g., bonded) to output end **28** of splitter chip **20** so that input ends **363** of output optical fibers **362** are aligned with and contacted to output ends **41** of output waveguides **40** of splitter chip **20.** Directly bonded fiber assembly output end **404** is attached to ferrule **360** using a soft-interfacing adhesive **420** that accommodates different expansion rates between directly bonded fiber assembly **400** and multi-fiber ferrule **360.**

The microsplitter module **10** according to the present invention provides a very small connectorized splitter that serves as device and module at the same time (i.e., the differentiation between device and module is, for all practical purposes, eliminated). The microsplitter module can be used as a single-to multi-fiber connector adapter, such as to connect a single SC/APC connectorized cable to an MTP connectorized eight-fiber-ribbon cable, or any other suitable type of single-fiber connector to multi-fiber connector.

Embodiments of the microsplitter module of the present invention that use a standard pigtail interface at the input side are particularly suitable for use in high density MDU cabinets. In an example embodiment, input optical fiber **56** is a bend performance fiber, which further reduces the space requirement for the module. The microsplitter module of the present invention integrates the device assembly process and the module assembly process into one step, thereby significantly reducing the variable cost associated with producing splitter modules. In addition, the size of the microsplitter module can be made much smaller (e.g., 60 millimeters by 12 millimeters by 8 millimeters), so that it is more amenable for use in reduced size cabinets, closures, other small size access points. Further, as mentioned above, the microsplitter module of the present invention can be directly integrated into cables or ducts.

Various embodiments of the present invention are adapted to include bend performance optical fibers. One example of bend performance optical fiber is a microstructured optical fiber having a core region and a cladding region surrounding the core region, the cladding region comprising an annular hole-containing region comprised of non-periodically disposed holes such that the optical fiber is capable of single mode transmission at one or more wavelengths in one or more operating wavelength ranges. The core region and cladding region provide improved bend resistance, and single mode operation at wavelengths preferably greater than or equal to 1500 nm, in some embodiments also greater than about 1310 nm, in other embodiments also greater than 1260 nm. The optical fibers provide a mode field at a wavelength of 1310 nm preferably greater than 8.0 microns, more preferably between about 8.0 and 10.0 microns. In preferred embodiments, optical fiber disclosed herein is thus single-mode transmission optical fiber.

In some embodiments of the present invention, the microstructured optical fibers disclosed herein comprises a core region disposed about a longitudinal centerline and a cladding region surrounding the core region, the cladding region comprising an annular hole-containing region comprised of non-periodically disposed holes, wherein the annular hole-containing region has a maximum radial width of less than 12 microns, the annular hole-containing region has a regional void area percent of less than about 30 percent, and the non-periodically disposed holes have a mean diameter of less than 1550 nm.

By "non-periodically disposed" or "non-periodic distribution", it is meant that when one takes a cross-section (such as a cross-section perpendicular to the longitudinal axis) of the optical fiber, the non-periodically disposed holes are randomly or non-periodically distributed across a portion of the fiber. Similar cross sections taken at different points along the length of the fiber will reveal different cross-sectional hole patterns, i.e., various cross-sections will have different hole patterns, wherein the distributions of holes and sizes of holes do not match. That is, the holes are non-periodic, i.e., they are not periodically disposed within the fiber structure. These holes are stretched (elongated) along the length (i.e. in a direction generally parallel to the longitudinal axis) of the optical fiber, but do not extend the entire length of the entire fiber for typical lengths of transmission fiber.

For a variety of applications, it is desirable for the holes to be formed such that greater than about 95% of and preferably all of the holes exhibit a mean hole size in the cladding for the optical fiber which is less than 1550 nm, more preferably less than 775 nm, most preferably less than 390 nm. Likewise, it is preferable that the maximum diameter of the holes in the fiber be less than 7000 nm, more preferably less than 2000 nm, and even more preferably less than 1550 nm, and most preferably less than 775 nm. In some embodiments, the fibers disclosed herein have fewer than 5000 holes, in some embodiments also fewer than 1000 holes, and in other embodiments the total number of holes is fewer than 500 holes in a given optical fiber perpendicular cross-section. Of course, the most preferred fibers will exhibit combinations of these characteristics. Thus, for example, one particularly preferred embodiment of optical fiber would exhibit fewer than 200 holes in the optical fiber, the holes having a maximum diameter less than 1550 nm and a mean diameter less than 775 nm, although useful and bend resistant optical fibers can be achieved using larger and greater numbers of holes. The hole number, mean diameter, max diameter, and total void area percent of holes can all be calculated with the help of a scanning electron microscope at a magnification of about 800X and image analysis software, such as ImagePro, which is available from Media Cybernetics, Inc. of Silver Spring, Maryland, USA.

The optical fibers disclosed herein may or may not include germania or fluorine to also adjust the refractive index of the core and or cladding of the optical fiber, but these dopants can also be avoided in the intermediate annular region and instead, the holes (in combination with any gas or gases that may be disposed within the holes) can be used to adjust the manner in which light is guided down the core of the fiber. The hole-containing region may consist of undoped (pure) silica, thereby completely avoiding the use of any dopants in the hole-containing region, to achieve a decreased refractive index, or the hole-containing region may comprise doped silica, e.g. fluorine-doped silica having a plurality of holes.

In one set of embodiments, the core region includes doped silica to provide a positive refractive index relative to pure silica, e.g. germania doped silica. The core region is preferably hole-free. In some embodiments, the core region comprises a single core segment having a positive maximum refractive index relative to pure silica Δ₁ in %, and the single core segment extends from the centerline to a radius R1. In one set of embodiments, 0.30% < Δ₁ < 0.40%, and 3.0 µm < R1 < 5.0 µm. In some embodiments, the single core segment has a refractive index profile with an alpha shape, where alpha is 6 or more, and in some embodiments alpha is 8 or more. In some embodiments, the inner annular hole-free region extends from the core region to a radius R2, wherein the inner annular hole-free region has a radial width W 12, equal to R2 - R1, and W12 is greater than 1 µm. Radius R2 is preferably greater than 5 µm, more preferably greater than 6 µm. The intermediate annular hole-containing region extends radially outward from R2 to radius R3 and has a radial width W23, equal to R3 - R2. The outer annular region 186 extends radially outward from R3 to radius R4. Radius R4 is the outermost radius of the silica portion of the optical fiber. One or more coatings may be applied to the external surface of the silica portion of the optical fiber, starting at R4, the outermost diameter or outermost periphery of the glass part of the fiber. The core region and the cladding region are preferably comprised of silica. The core region is preferably silica doped with one or more dopants. Preferably, the core region is hole-free. The hole-containing region has an inner radius R2 which is not more than 20 µm. In some embodiments, R2 is not less than 10 µm and not greater than 20 µm. In other embodiments, R2 is not less than 10 µm and not greater than 18 µm. In other embodiments, R2 is not less than 10 µm and not greater than 14 µm. Again, while not being limited to any particular width, the hole-containing region has a radial width W23 which is not less than 0.5 µm. In some embodiments, W23 is not less than 0.5 µm and not greater than 20 µm. In other embodiments, W23 is not less than 2 µm and not greater than 12 µm. In other embodiments, W23 is not less than 2 µm and not greater than 10 µm.

Such fiber can be made to exhibit a fiber cutoff of less than 1400 nm, more preferably less than 1310 nm, a 20 millimeters macrobend induced loss at 1550 nm of less than 1 dB/turn, preferably less than 0.5 dB/turn, even more preferably less than 0.1 dB/turn, still more preferably less than 0.05 dB/turn, yet more preferably less than 0.03 dB/turn, and even still more preferably less than 0.02 dB/turn, a 12 millimeters macrobend induced loss at 1550 nm of less than 5 dB/turn, preferably less than 1 dB/turn, more preferably less than 0.5 dB/turn, even more preferably less than 0.2 dB/turn, still more preferably less than 0.01 dB/turn, still even more preferably less than 0.05 dB/turn, and a 8 millimeters macrobend induced loss at 1550 nm of less than 5 dB/turn, preferably less than 1 dB/turn, more preferably less than 0.5 dB/turn, and even more preferably less than 0.2 dB-turn, and still even more preferably less than 0.1 dB/turn.

The fiber of some embodiments of the present invention comprises a core region that is surrounded by a cladding region that comprises randomly disposed voids which are contained within an annular region spaced from the core and positioned to be effective to guide light along the core region. Other optical fibers and microstructured fibers may be used in the present invention. Additional features of the microstructured optical fibers of additional embodiments of the present invention are described more fully in pending U.S. patent application serial number 11/583,098 filed October 18, 2006, and provisional U.S. patent application serial numbers 60/817,863 filed June 30, 2006; 60/817,721 filed June 30, 2006; 60/841,458 filed August 31, 2006; and 60/841,490 filed August 31, 2006; all of which are assigned to Coming Incorporated.

Still further embodiments of the present invention comprise fiber optic cables comprising bend resistant multimode optical fibers which comprise a graded-index core region and a cladding region surrounding and directly adjacent to the core region, the cladding region comprising a depressed-index annular portion comprising a depressed relative refractive index, relative to another portion of the cladding (which preferably is silica which is not doped with an index of refraction altering dopant such as germania or fluorine). Preferably, the refractive index profile of the core has a parabolic shape. The depressed-index annular portion may comprise glass comprising a plurality of holes, fluorine-doped glass, or fluorine-doped glass comprising a plurality of holes. The depressed index region can be adjacent to or spaced apart from the core region.

In some embodiments that comprise a cladding with holes, the holes can be non-periodically disposed in the depressed-index annular portion. By "non-periodically disposed" or "non-periodic distribution", we mean that when viewed in cross section (such as a cross section perpendicular to the longitudinal axis) of the optical fiber, the non-periodically disposed holes are randomly or non-periodically distributed across the hole containing region. Cross sections taken at different points along the length of the fiber will reveal different cross-sectional hole patterns, i.e., various cross sections will have different hole patterns, wherein the distributions of holes and sizes of holes do not match. That is, the voids or holes are non-periodic, i.e., they are not periodically located within the fiber structure. These holes are stretched (elongated) along the length (i.e. parallel to the longitudinal axis) of the optical fiber, but do not extend the entire length of the entire fiber for typical lengths of transmission fiber.

The multimode optical fiber disclosed herein exhibits very low bend induced attenuation, in particular very low macrobending. In some embodiments, high bandwidth is provided by low maximum relative refractive index in the core, and low bend losses are also provided. In some embodiments, the core radius is large (e.g. greater than 20 µm), the core refractive index is low (e.g. less than 1.0%), and the bend losses are low. Preferably, the multimode optical fiber disclosed herein exhibits a spectral attenuation of less than 3 dB/km at 850 nm.

The numerical aperture (NA) of the optical fiber is preferably greater than the NA of the optical source directing signals into the fiber; for example, the NA of the optical fiber is preferably greater than the NA of a VCSEL source. The bandwidth of the multimode optical fiber varies inversely with the square of Δ1_{MAX}. For example, a multimode optical fiber with Δ1_{MAX} of 0.5% can yield a bandwidth 16 times greater than an otherwise identical multimode optical fiber except having a core with Δ1_{MAX} of 2.0%.

In some embodiments, the core extends radially outwardly from the centerline to a radius R1, wherein 12.5 ≤ R1 ≤ 40 microns. In some embodiments, 25 ≤ R1 ≤ 32.5 microns, and in some of these embodiments, R1 is greater than or equal to about 25 microns and less than or equal to about 31.25 microns. The core preferably has a maximum relative refractive index, less than or equal to 1.0%. In other embodiments, the core has a maximum relative refractive index, less than or equal to 0.5%. Such multimode fibers preferably exhibit a 1 turn 10 millimeter diameter mandrel attenuation increase of no more than 1.0 dB, preferably no more than 0.5 dB, more preferably no more than 0.25 dB, even more preferably no more than 0.1 dB, and still more preferably no more than 0.05 dB, at all wavelengths between 800 and 1400 nm.

If non-periodically disposed holes or voids are employed in the depressed index annular region, it is desirable for the holes to be formed such that greater than 95% of and preferably all of the holes exhibit a mean hole size in the cladding for the optical fiber which is less than 1550 nm, more preferably less than 775 nm, most preferably less than about 390 nm. Likewise, it is preferable that the maximum diameter of the holes in the fiber be less than 7000 nm, more preferably less than 2000 nm, and even more preferably less than 1550 nm, and most preferably less than 775 nm. In some embodiments, the fibers disclosed herein have fewer than 5000 holes, in some embodiments also fewer than 1000 holes, and in other embodiments the total number of holes is fewer than 500 holes in a given optical fiber perpendicular cross-section. Of course, the most preferred fibers will exhibit combinations of these characteristics. Thus, for example, one particularly preferred embodiment of optical fiber would exhibit fewer than 200 holes in the optical fiber, the holes having a maximum diameter less than 1550 nm and a mean diameter less than 775 nm, although useful and bend resistant optical fibers can be achieved using larger and greater numbers of holes. The hole number, mean diameter, max diameter, and total void area percent of holes can all be calculated with the help of a scanning electron microscope at a magnification of about 800X and image analysis software, such as ImagePro, which is available from Media Cybernetics, Inc. of Silver Spring, Maryland, USA.

The optical fiber disclosed herein may or may not include germania or fluorine to also adjust the refractive index of the core and or cladding of the optical fiber, but these dopants can also be avoided in the intermediate annular region and instead, the holes (in combination with any gas or gases that may be disposed within the holes) can be used to adjust the manner in which light is guided down the core of the fiber. The hole-containing region may consist of undoped (pure) silica, thereby completely avoiding the use of any dopants in the hole-containing region, to achieve a decreased refractive index, or the hole-containing region may comprise doped silica, e.g. fluorine-doped silica having a plurality of holes.

The outer annular portion of a cross-section of the glass portion of an embodiment of a multimode optical fiber has a substantially constant refractive index profilewith a constant Δ4(r); in some of these embodiments, Δ4(r) = 0%. The "relative refractive index percent" is defined as Δ% = 100 x (nᵢ² -n_{REF}²)/2nᵢ². The relative refractive index percent is measured at 850 nm unless otherwise specified. In certain embodiments, the reference index n_{REF} is the refractive index of inner annular portion. The core is surrounded by and in direct contact with the inner annular portion, which has a substantially constant refractive index profile Δ2(r). The inner annular portion is surrounded by and in direct contact with the depressed-index annular portion having refractive index profile Δ3, and the depressed-index annular portion is surrounded by and in direct contact with the outer annular portion, which has a substantially constant refractive index profile Δ4(r).

The core has an entirely positive refractive index profile, where Δ1(r) > 0%. In some embodiments, the inner annular portion has a relative refractive index profile Δ2(r) having a maximum absolute magnitude less than 0.05%, and Δ2_{MAX} < 0.05% and Δ2_{MIN} > -0.05%, and the depressed-index annular portion begins where the relative refractive index of the cladding first reaches a value of less than -0.05%, going radially outwardly from the centerline. In some embodiments, the outer annular portion has a relative refractive index profile Δ4(r) having a maximum absolute magnitude less than 0.05%, and Δ4_{MAX} < 0.05% and Δ4_{MIN} > -0.05%, and the depressed-index annular portion ends where the relative refractive index of the cladding first reaches a value of greater than -0.05%, going radially outwardly from the radius where Δ3MIN is found. In some embodiments, the inner annular portion comprises pure silica. In some embodiments, the outer annular portion comprises pure silica. In some embodiments, the depressed-index annular portion comprises pure silica comprising with a plurality of holes. Preferably, the minimum relative refractive index, or average effective relative refractive index, such as taking into account the presence of any holes, of the depressed-index annular portion is preferably less than -0.1%. The holes can contain one or more gases, such as argon, nitrogen, or oxygen, or the holes can contain a vacuum with substantially no gas; regardless of the presence or absence of any gas, the refractive index in the annular portion is lowered due to the presence of the holes. The holes can be randomly or non-periodically disposed in the annular portion of the cladding **500,** and in other embodiments, the holes are disposed periodically in the annular portion. In some embodiments, the plurality of holes comprises a plurality of non-periodically disposed holes and a plurality of periodically disposed holes. Alternatively, or in addition, the depressed index in annular portion can also be provided by downdoping the annular portion (such as with fluorine) or updoping one or more portions of the cladding and/or the core, wherein the depressed-index annular portion is, for example, pure silica or silica which is not doped as heavily as the inner annular portion.

Preferably, the inner annular portion has a radial width of greater than 4 microns. In some embodiments, the minimum relative refractive index of the depressed-index annular portion, Δ3MIN, is less than -0.10%; in other embodiments, Δ3MIN is less than -0.20%; in still other embodiments, Δ3MIN is less than -0.30%; in yet other embodiments, Δ3MIN is less than-0.40%.

A1_{MAX} may is preferably less than or equal to 2.0%, more preferably less than or equal to 1.0%, even more preferably less than 1.0%, and still more preferably less than or equal to 0.8%; in some embodiments Δ1_{MAX} is greater than or equal to 0.4% and less than or equal to 1.0%, and in other embodiments Δ1_{MAX} is greater than or equal to 0.5% and less than or equal to 0.75%.

The numerical aperture (NA) of the optical fiber is preferably greater than the NA of the optical source directing signals into the fiber; for example, the NA of the optical fiber is preferably greater than the NA of a VCSEL source. The bandwidth of the multimode optical fiber varies inversely with the square of Δ1_{MAX}. For example, a multimode optical fiber with Δ1_{MAX} of 0.5% can yield a bandwidth 16 times greater than an otherwise identical multimode optical fiber except having a core with Δ1_{MAX} of 2.0%.

In some embodiments, the core outer radius, R₁, is preferably not less than 12.5 µm and not more than 40 µm, i.e. the core diameter is between about 25 and 80 µm. In other embodiments, R1 > 20 microns; in still other embodiments, R1 > 22 microns; in yet other embodiments, R1 > 24 microns.

It will be apparent to those skilled in the art that various modifications and variations can be made to the present invention without departing from the spirit and scope of the invention. Thus it is intended that the present invention cover the modifications and variations of this invention provided they come within the scope of the appended claims.

## Claims

1. A microsplitter module (10) adapted to optically connect an input optical fiber (56) with at least one external output device having an associated connector type, comprising:
a splitter chip assembly (316) with a splitter chip (20) that includes a body (318), input (26) and output (28) ends, and a branching waveguide network (30) supported by the body (318) and that includes at least one input waveguide (36) at its input end (26) and at least two output waveguides (40) each having output ends (41) at the splitter chip assembly (316) output end (28);
an input ferrule (50) bonded to the splitter chip assembly (316) input end (26) and adapted to maintain optical coupling between the input optical fiber (56) and the input waveguide (36) of the splitter chip assembly (316);
a multi-fiber ferrule (360) having a body (361) that supports at least two output optical fibers (362) having input (363) and output (364) ends, wherein the multi-fiber ferrule (360) is arranged adjacent the splitter chip assembly (316) output end (28) so that the at least two output optical fiber (362) input ends (363) of the multi-fiber ferrule (360) are optically coupled to corresponding at least two output ends (41) of the at least two splitter chip assembly (316) output waveguides (40); and
**characterized in that** at least a portion of the input ferrule (50), the splitter chip assembly (316) and the multi-fiber output ferrule are contained within a housing, wherein the housing is formed to provide conformity with the connector type associated with the at least one external output device and maintains the input ferrule (50), splitter chip (20) and multi-fiber ferrule (360) in mutual alignment.

2. The microsplitter module (10) of claim 1, **further characterized in that** the multi-fiber ferrule (360) is bonded to the splitter chip assembly (316) output end (28).

3. The microsplitter module (10) of claims 1 or 2, **further characterized in that**:
the splitter chip assembly (316) has beveled input (26) and output (28) ends;
the input ferrule (50) and input optical fiber (56) have beveled ends (326) corresponding to the splitter chip assembly (316) input beveled end (26) ; and
the input end (363) of the multi-fiber ferrule (360) and the at least two output waveguide (40) output ends (41) are beveled to correspond to the splitter chip assembly (316) output end (28).

4. The microsplitter module (10) of claims 1-3, **further characterized in that**:
a multi-fiber array (60) having a body (61), an input end (62), an output end, and two or more array optical fibers (74) having respective input ends at the array input end (62) is included, wherein the at least two array optical fibers (74) constitute the at least two output optical fibers (362) supported by the multi-fiber ferrule (360); and
wherein the multi-fiber array body (61) and the multi-fiber ferrule body (361) are separated by a distance sufficient to avoid any differences in thermal expansion between the multi-fiber array body (61) and the multi-fiber ferrule body (361).

5. The microsplitter module (10) of claims 1-4, **further characterized in that** the splitter chip assembly (216) and the multi-fiber ferrule (360) have different coefficients of thermal expansion that potentially could destabilize the module (10), the module (10) further including:
a stabilization unit (400) having an input end (402) and an output end (404) and arranged between the output end (28) of the splitter chip assembly (316) and the input end (363) of the multi-fiber ferrule (360), the stabilization unit (400) adapted to support the at least two output optical fibers (362) of the multi-fber ferrule (360) so as to be optically coupled to the output ends (41) of the at least two output waveguides (40) of the splitter chip assembly (316), the stabilization unit (400) further adapted to provide thermal and mechanical stabilization of the splitter chip assembly (316) and the multi-fiber ferrule (360).

6. The microsplitter module (10) of claim 5, **further characterized in that** the stabilization unit (400) is mechanically decoupled from the multi-fiber ferrule (360) using a soft-interfacing adhesive (420).

7. The microsplitter module (10) of claims 1-6, **further characterized in that** the multi-fiber ferrule (360) constitutes at least a portion of an MTP-type connector.

8. The microsplitter module (10) of claim 1-7, **further characterized in that** the input optical fiber (56) and the input ferrule (50) constitute a pigtail assembly (380).

9. The microsplitter module (10) of claim 8, **further characterized in that** the housing (200) includes a boot section (202) that covers at least a portion of the pigtail assembly (380).

10. The microsplitter module (10) of claims 1-9, **further characterized in that** the at least one external output device as optically coupled to at least one of the at least two output optical fibers (362) supported by the multi-fiber ferrule (360).

11. The microsplitter module (10) of claims 1-7 and 10, **further characterized in that** a connector sleeve (330) covers the input ferrule (50), wherein the connector sleeve (330) facilitates optically connecting input optical fiber (56) to an external optical fiber cable (350).

## Patentansprüche

1. Mikroverteilermodul (10), geeignet zum optischen Anschließen einer Eingangs-Lichtleitfaser (56) an mindestens eine externe Ausgangsvorrichtung, die einen dazugehörigen Anschlusstyp aufweist, umfassend:
eine Verteiler-Chip-Baugruppe (316) mit einem Verteiler-Chip (20), der einen Körper (318), Eingangs- (26) und Ausgangs- (28) Enden und ein Verzweigungs-Wellenleiternetz (30), das von dem Körper (318) getragen wird, umfasst und der mindestens einen Eingangs-Wellenleiter (36) an seinem Eingangsende (26) und mindestens zwei Ausgangs-Wellenleiter (40) umfasst, die jeweils Ausgangsenden (41) an dem Ausgangsende (28) der Verteiler-Chip-Baugruppe (316) aufweisen;
eine Eingangs-Ferrule (50), die mit dem Eingangsende (26) der Verteiler-Chip-Baugruppe (316) verbunden ist und geeignet ist, eine optische Kopplung zwischen der Eingangs-Lichtleitfaser (56) und dem Eingangs-Wellenleiter (36) der Verteiler-Chip-Baugruppe (316) aufrechtzuerhalten;
eine Multifaser-Ferrule (360), die einen Körper (361) aufweist, der mindestens zwei Ausgangs-Lichtleitfasern (362) trägt, die Eingangs- (363) und Ausgangs- (364) Enden aufweisen, wobei die Multifaser-Ferrule (360) neben dem Ausgangsende (28) der Verteiler-Chip-Baugruppe (316) angeordnet ist, so dass die mindestens zwei Eingangsenden (363) der Ausgangs-Lichtleitfasern (362) der Multifaser-Ferrule (360) mit entsprechenden mindestens zwei Ausgangsenden (41) der mindestens zwei Ausgangs-Wellenleiter (40) der Verteiler-Chip-Baugruppe (316) optisch gekoppelt sind; und
**dadurch gekennzeichnet, dass** mindestens ein Teil der Eingangs-Ferrule (50), die Verteiler-Chip-Baugruppe (316) und die Multifaser-Ausgangs-Ferrule in einem Gehäuse enthalten sind, wobei das Gehäuse gebildet ist, um die Übereinstimmung mit dem Anschlusstyp bereitzustellen, der mit der mindestens einen externen Ausgangsvorrichtung verknüpft ist, und die Eingangs-Ferrule (50), den Verteiler-Chip (20) und die Multifaser-Ferrule (360) in gegenseitiger Ausrichtung hält.

2. Mikroverteilermodul (10) nach Anspruch 1, **ferner dadurch gekennzeichnet, dass** die Multifaser-Ferrule (360) mit dem Ausgangsende (28) der Verteiler-Chip-Baugruppe (316) verbunden ist.

3. Mikroverteilermodul (10) nach Anspruch 1 oder 2, **ferner dadurch gekennzeichnet, dass**:
die Verteiler-Chip-Baugruppe (316) abgeschrägte Eingangs- (26) und Ausgangs- (28) Enden aufweist;
die Eingangs-Ferrule (50) und die Eingangs-Lichtleitfaser (56) abgeschrägte Enden (326) aufweisen, die dem abgeschrägten Eingangsende (26) der Verteiler-Chip-Baugruppe (316) entsprechen; und
das Eingangsende (363) der Multifaser-Ferrule (360) und die mindestens zwei Ausgangsenden (41) des Ausgangs-Wellenleiters (40) abgeschrägt sind, um dem Ausgangsende (28) der Verteiler-Chip-Baugruppe (316) zu entsprechen.

4. Mikroverteilermodul (10) nach Anspruch 1 bis 3, **ferner dadurch gekennzeichnet, dass**:
ein Multifaser-Array (60), das einen Körper (61), ein Eingangsende (62), ein Ausgangsende und zwei oder mehr Array-Lichtleitfasern (74), die jeweilige Eingangsenden an dem Array-Eingangsende (62) aufweisen, umfasst, enthalten ist, wobei die mindestens zwei Array-Lichtleitfasern (74) die mindestens zwei Ausgangs-Lichtleitfasern (362) bilden, die von der Multifaser-Ferrule (360) getragen werden; und
wobei der Multifaser-Array-Körper (61) und der Multifaser-Ferrulen-Körper (361) um einen Abstand getrennt sind, der ausreicht, um eventuelle Unterschiede der thermischen Ausdehnung zwischen dem Multifaser-Array-Körper (61) und dem Multifaser-Ferrulen-Körper (361) zu vermeiden.

5. Mikroverteilermodul (10) nach Anspruch 1 bis 4, **ferner dadurch gekennzeichnet, dass** die Verteiler-Chip-Baugruppe (216) und die Multifaser-Ferrule (360) verschiedene Koeffizienten der thermischen Ausdehnung aufweisen, die das Modul (10) gegebenenfalls destabilisieren könnten, wobei das Modul (10) ferner Folgendes umfasst:
eine Stabilisierungseinheit (400), die ein Eingangsende (402) und ein Ausgangsende (404) aufweist und zwischen dem Ausgangsende (28) der Verteiler-Chip-Baugruppe (316) und dem Eingangsende (363) der Multifaser-Ferrule (360) angeordnet ist, wobei die Stabilisierungseinheit (400) geeignet ist, die mindestens zwei Ausgangs-Lichtleitfasern (362) der Multifaser-Ferrule (360) zu tragen, damit sie mit den Ausgangsenden (41) der mindestens zwei Ausgangs-Wellenleiter (40) der Verteiler-Chip-Baugruppe (316) optisch gekoppelt sind, wobei die Stabilisierungseinheit (400) ferner geeignet ist, eine thermische und mechanische Stabilisierung der Verteiler-Chip-Baugruppe (316) und der Multifaser-Ferrule (360) bereitzustellen.

6. Mikroverteilermodul (10) nach Anspruch 5, **ferner dadurch gekennzeichnet, dass** die Stabilisierungseinheit (400) von der Multifaser-Ferrule (360) unter Verwendung eines weich verbindenden Klebstoffs (420) mechanisch entkoppelt ist.

7. Mikroverteilermodul (10) nach Anspruch 1 bis 6, **ferner dadurch gekennzeichnet, dass** die Multifaser-Ferrule (360) mindestens einen Teil eines MTP-artigen Anschlussteils bildet.

8. Mikroverteilermodul (10) nach Anspruch 1 bis 7, **ferner dadurch gekennzeichnet, dass** die Eingangs-Lichtleitfaser (56) und die Eingangs-Ferrule (50) eine Pigtail-Baugruppe (380) bilden.

9. Mikroverteilermodul (10) nach Anspruch 8, **ferner dadurch gekennzeichnet, dass** das Gehäuse (200) einen Muffenabschnitt (202) umfasst, der mindestens einen Teil der Pigtail-Baugruppe (380) bedeckt.

10. Mikroverteilermodul (10) nach Anspruch 1 bis 9, **ferner dadurch gekennzeichnet, dass** die mindestens eine externe Ausgangsvorrichtung mit mindestens einer der mindestens zwei Ausgangs-Lichtleitfasern (362), die von der Multifaser-Ferrule (360) getragen werden, optisch gekoppelt ist.

11. Mikroverteilermodul (10) nach Anspruch 1 bis 7 und 10, **ferner dadurch gekennzeichnet, dass** eine Anschlusshülse (330) die Eingangs-Ferrule (50) bedeckt, wobei die Anschlusshülse (330) das optische Anschließen der Eingangs-Lichtleitfaser (56) an ein externes Lichtleitfaserkabel (350) ermöglicht.

## Revendications

1. Module de microdiviseur (10) conçu pour connecter optiquement une fibre optique d'entrée (56) avec au moins un dispositif de sortie externe ayant un type de connecteur associé, comprenant :
un assemblage de puce de diviseur (316) avec une puce de diviseur (20) qui comprend un corps (318), des extrémités d'entrée (26) et de sortie (28), et un réseau de guides d'onde d'embranchements (30) supporté par le corps (318) et qui comprend au moins un guide d'onde d'entrée (36) à son extrémité d'entrée (26) et au moins deux guides d'onde de sortie (40) chacun ayant des extrémités de sortie (41) au niveau de l'extrémité de sortie (28) de l'assemblage de puce de diviseur (316) ;
une ferrule d'entrée (50) collée à l'extrémité d'entrée (26) de l'assemblage de puce de diviseur (316) et conçue pour maintenir un couplage optique entre la fibre optique d'entrée (56) et le guide d'onde d'entrée (36) de l'assemblage de puce de diviseur (316) ;
une ferrule à fibres multiples (360) ayant un corps (361) qui supporte au moins deux fibres optique de sortie (362) ayant des extrémités d'entrée (363) et de sortie (364), où la ferrule à fibres multiples(360) est disposée de manière adjacente à l'extrémité de sortie (28) de l'assemblage de puce de diviseur (316) de manière à ce que les au moins deux extrémités d'entrée (363) d'une fibre optique de sortie (362) de la ferrule à fibres multiples (360) soient couplées optiquement aux au moins deux extrémités de sortie (41) correspondantes des au moins deux guides d'onde de sortie (40) de l'assemblage de puce de diviseur (316) ; et
**caractérisé en ce qu'**au moins une partie de la ferrule d'entrée (50), l'assemblage de puce de diviseur (316) et la ferrule de sortie à fibres multiples soient contenus dans un boîtier, où le boîtier est formé pour être conforme au type de connecteur associé avec l'au moins un dispositif de sortie externe et maintient la ferrule d'entrée (50), la puce de diviseur (20) et une ferrule à fibres multiples (360) dans un alignement mutuel.

2. Module de microdiviseur (10) selon la revendication 1, **caractérisé en outre en ce que** la ferrule à fibres multiples (360) est collée à l'extrémité de sortie (28) de l'assemblage de puce de diviseur (316).

3. Module de microdiviseur (10) selon la revendication 1 ou la revendication 2, **caractérisé en outre en ce que** :
l'assemblage de puce de diviseur (316) à des extrémités d'entrée (26) et de sortie (28) biseautées ;
la ferrule d'entrée (50) et une fibre optique d'entrée (56) ont des extrémités biseautées (326) correspondant à l'extrémité d'entrée (26) biseautée de l'assemblage de puce de diviseur (316) ; et
l'extrémité d'entrée (363) de la ferrule à fibres multiples (360) et les au moins deux extrémités de sortie (41) de guide d'onde de sortie (40) sont biseautées pour correspondre à l'extrémité de sortie (28) de l'assemblage de puce de diviseur (316).

4. Module de microdiviseur (10) selon les revendications 1 à 3, **caractérisé en outre en ce que** :
un réseau à fibres multiples (60), ayant un corps (61), une extrémité d'entrée (62), et une extrémité de sortie, et deux ou plusieurs fibres optique de réseau (74) ayant des extrémités d'entrée respectives au niveau de l'extrémité d'entrée du réseau (62), est inclus, où les au moins deux fibres optiques de réseau (74) constituent les au moins deux fibres optiques de sortie (362) supportées par la ferrule à fibres multiples (360) ; et
où le corps de réseau à fibres multiples (61) et le corps de ferrule à fibres multiples (361) sont séparés par une distance suffisante pour éviter toutes éventuelles différences de dilatation thermique entre le corps de réseau à fibres multiples (61) et le corps de ferrule à fibres multiples (361).

5. Module de microdiviseur (10) selon les revendications 1 à 4, **caractérisé en outre en ce que** l'assemblage de puce de diviseur (216) et la ferrule à fibres multiples (360) ont des coefficients différents de dilatation thermique qui pourraient potentiellement déstabiliser le module (10), le module (10) comprenant en outre :
une unité de stabilisation (400) ayant une extrémité d'entrée (402) et une extrémité de sortie (404) et disposée entre l'extrémité de sortie (28) de l'assemblage de puce de diviseur (316) et l'extrémité d'entrée (363) de la ferrule à fibres multiples (360), l'unité de stabilisation (400) étant conçue pour supporter les au moins deux fibres optiques de sortie (362) de la ferrule à fibres multiples (360) de manière à être optiquement couplées aux extrémités de sortie (41) des au moins deux guides d'onde de sortie (40) de l'assemblage de puce de diviseur (316), l'unité de stabilisation (400) étant en outre conçue pour délivrer une stabilisation mécanique et thermique de l'assemblage de puce de diviseur (316) et de la ferrule à fibres multiples (360).

6. Module de microdiviseur (10) selon la revendication 5, **caractérisé en outre en ce que** l'unité de stabilisation (400) est mécaniquement découplée de la ferrule à fibres multiples (360) au moyen d'un adhésif d'interface douce (420).

7. Module de microdiviseur (10) selon les revendications 1 à 6, **caractérisé en outre en ce que** la ferrule à fibres multiples (360) constitue au moins une partie d'un connecteur de type MTP.

8. Module de microdiviseur (10) selon les revendications 1 à 7, **caractérisé en outre en ce que** la fibre optique d'entrée (56) et la ferrule d'entrée (50) constituent un assemblage amorce (380).

9. Module de microdiviseur (10) selon la revendication 8, **caractérisé en outre en ce que** le boîtier (200) comprend une section d'amorçage (202) qui couvre au moins une partie de l'assemblage amorce (380).

10. Module de microdiviseur (10) selon les revendications 1 à 9, **caractérisé en outre en ce que** l'au moins un dispositif de sortie externe est optiquement couplé à au moins un des au moins deux fibres optiques de sortie (362) supportées par la ferrule à fibres multiples (360).

11. Module de microdiviseur (10) selon les revendications 1 à 7 et 10, **caractérisé en outre en ce qu'**un manchon de connecteur (330) couvre la ferrule d'entrée (50), où le manchon de connecteur (330) facilite optiquement la connexion optique d'une fibre optique d'entrée (56) à un câble de fibre optique externe (350).
